# EUROPÄISCHE PATENTSCHRIFT

(11) **EP 1 286 846 B1**
(45) Veröffentlichungstag und Bekanntmachung des Hinweises auf die Patenterteilung: **15.11.2006**
(21) Anmeldenummer: 00938754.9
(22) Anmeldetag: 05.06.2000
(51) Int. Cl.: B60J 7/08, B62D 25/06, B62D 65/00

(54) **MODULDACH EINES KRAFTFAHRZEUGS**
MODULAR AUTOMOBILE ROOF
TOIT MODULAIRE D'UN VEHICULE AUTOMOBILE

(43) Veröffentlichungstag der Anmeldung: 05.03.2003
(73) Patentinhaber: Webasto Vehicle Systems International GmbH, 82131 Stockdorf (DE)
(72) Erfinder: DE GAILLARD, Francois, F-85390 Mouilleron en Pareds (FR)
(74) Vertreter: Konnerth, Dieter Hans
(86) Internationale Anmeldenummer: PCT/EP2000/005125
(87) Internationale Veröffentlichungsnummer: WO 2001/094141

(56) Entgegenhaltungen:
- DE-U- 29 601 330
- GB-A- 2 184 404
- US-A- 5 540 478

## Beschreibung

Die vorliegende Erfindung betrifft ein Moduldach eines Kraftfahrzeugs mit einer Dachkonstruktion der Rohkarosserie, die einen vorderen und einen hinteren Querholm und einen rechten und einen linken Seitenholm aufweist.

Ein Schiebedach an einem Dachoberteil eines herkömmlichen Fahrzeugs, das eine Dachkonstruktion insbesondere aus Metallblech aufweist, zu montieren, ist bekannt. Herkömmlicherweise wird eine Öffnung in dem Oberteil des Daches hergestellt und daran die Schiebedacheinheit eingebaut. Wenn auch auf diese Weise ein qualitativ hochwertiger Einbau möglich ist, so stellt jedoch das Herstellen der Öffnung einen zusätzlichen Arbeitsvorgang neben den herkömmlichen Vorgängen der Formung des Dachoberteils dar. Ebenso erfordern die für die Herstellung dieser Öffnung notwendigen Geräte zusätzliche Investitionen im Vergleich zu jenen, die für ein herkömmliches Fahrzeug ohne Schiebedach erforderlich sind.

Aus der DE 35 45 871 A1 ist ein Kraftfahrzeugdach bekannt geworden, das eine Einbaueinheit in Form eines Dachaufsatzes aufweist, die nachträglich auf mindestens die seitlichen Dachholme einer Dachkonstruktion aufsetzbar und daran festlegbar ist. In den Dachaufsatz ist eine fertigmontierte Lüftungseinrichtung wie beispielsweise ein Schiebedach oder ein Spoilerdach integriert. Verschiedene Dachaufsätze, die jedoch stets als Einbaueinheit die gleiche, an die Lage der Dachholme angepaßte Größe aufweisen, können an den Dachholmen befestigt werden.

Eine aus der gattungsbildenden US-A-5 540 478 bekannte Dachkonstruktion enthält einen rechten und einen linken Dach- oder Seitenholm. Ein Modul-Einsatzdach wird unter Verwendung einer Lehre hergestellt und entsteht dadurch, dass an zwei seitlich längs laufenden Dachleisten zur Erzeugung eines geschlossenen Rahmens vorne ein Rahmenvorderteil und hinten ein Rahmenhinterteil angefügt wird. Das Rahmenvorderteil und das Rahmenhinterteil sowie die Dachleisten sind somit Teil des Moduldaches. Eine zur Lehre korrespondierende Rohbaulehre dient zum Herstellen von Fixierpunkten an Verstärkungsblechen des jeweiligen Seitenholms. An diesen Fixierpunkten wird das Moduldach über die Dachleisten z. B. durch Verschrauben befestigt. Beim Fahrzeugzulieferer kann an den Dachleisten eine Vielzahl von Dachteilen angebracht werden.

Aus der DE 296 01 330 U1 ist ein Hardtop für ein Cabriolet bekannt geworden, das einen verkürzten Dachbereich aufweist, so dass ein offener Fahrzeugdachbereich zwischen dem Hardtopdach und einem oberen Rand einer Frontscheibe verbleibt. In diesen offnen Dachbereich ist zumindest ein Dacheinsatzelement einsetzbar.

Aufgabe der vorliegenden Erfindung ist es, ein gattungsgemäßes Moduldach zu schaffen, das eine variablere Gestaltung des Fahrzeugdaches bei vereinfachter Herstellung ermöglicht, sowie ein Kraftfahrzeug mit einem derartigen Moduldach anzugeben.

Diese Aufgabe wird bei einem gattungsgemäßen Moduldach dadurch gelöst, daß das Moduldach zumindest zwei Dachmodulelemente aufweist, die eine von den Seitenholmen begrenzte Dachkonstruktionsöffnung teilweise oder vollständig verschließen und unmittelbar an der Dachkonstruktion befestigt sind. Durch die wahlweise Kombination von zumindest zwei Dachmodulelementen können vielfältig gestaltete Modul- bzw. Fahrzeugdächer gebildet werden, wobei der dafür erforderliche Aufwand wesentlich geringer ist, wie wenn jede gewünschte Variante als Komplettteil vorrätig gehalten werden müßte.

Vorteilhafte Ausgestaltungen der Erfindung sind in den Unteransprüchen angegeben.

Bevorzugt sind die sich über die gesamte Breite der Dachkonstruktion erstreckenden Dachmodulelemente an den sich gegenüberliegenden Seitenholmen befestigt, so daß keine Zwischenelemente oder dergleichen erforderlich sind. Wenn die Dachmodulelemente lösbar befestigt sind, kann ein montiertes Moduldach durch Austausch von Dachmodulelementen umgewandelt werden.

Eine Variabilität des Moduldaches ist dadurch gewährleistet, daß die Querholme und die Seitenholme die Dachkonstruktionsöffnung begrenzen, die von den zumindest zwei Dachmodulelementen teilweise oder vollständig verschließbar ist.

Eine zwischen zwei Dachmodulelementen oder zwischen einem Dachmodulelement und einem Querholm verbleibende Dachöffnung kann von zumindest einem weiteren Dachmodulelement verschließbar sein. Generell können die Dachmodulelemente Deckel, transparente Deckel, Glasdeckel oder Funktionsdachteile wie öffnungsfähige Dachteile und insbesondere Schiebedacheinheiten sein.

Zweckmäßigerweise besteht die Dachkonstruktion aus Metallblech, jedoch können auch andere Werkstoffe wie hochfeste Kunststoffe verwendet werden.

Die einzelnen Dachmodulelemente können rahmenlos gebildet sein oder sie können, insbesondere als Schiebedacheinheit, einen Rahmen aufweisen. Ein Dachmodulelement bzw. eine Schiebedacheinheit kann einen Rahmen mit einem vorderen und einem hinteren Rahmenquerelement und einem rechten und einem linken Rahmenseitenelement aufweisen und einen am Rahmen beweglich gelagerten Deckel aufnehmen, wobei jedes der Rahmenseitenelemente Mittel zur Befestigung dieses Rahmenseitenelements an dem jeweiligen Seitenholm umfaßt und wobei sich jedes der Rahmenquerelemente über die gesamte Breite der Dachkonstruktion zwischen den beiden Seitenholmen erstreckt.

In einer einfachen Gestaltung kann das vordere Rahmenquerelement zum direkten Befestigen an dem Querholm am Oberrand der Windschutzscheibe und das hintere Rahmenquerelement zum direkten Befestigen an dem Querholm am Oberrand der Heckscheibe vorgesehen sein.

Bevorzugt weist jedes direkt an einem zugeordneten Holm der Dachkonstruktion befestigte Rahmenelement Mittel auf, so daß es unter Zwischenlage einer Dichtung auf einem Flansch aufliegt, der auf der Innenseite des Holms vorgesehen ist.

Zweckmäßigerweise kann die Schiebedacheinheit als ein mit einer Innenverkleidung komplett vorgefertigtes Teilsystem an der Dachkonstruktion angebracht werden. Generell kann jedes Dachmodulelement, das Zusatzbauteile enthält, vorgefertigt werden, so daß eine Endmontage am Fahrzeugdach vereinfacht wird.

Zur Lösung der Aufgabe wird bei einem Kraftfahrzeug mit einer insbesondere aus Metallblech gefertigten Dachkonstruktion zum Festlegen eines Moduldaches, das gemäß den voranstehenden Ausführungen gebildet ist, vorgeschlagen, daß das Kraftfahrzeug in einem jeweiligen Moduldach alternativ entweder eine öffnungsfähige Dacheinheit, die zwischen einem vorderen Dachmodulelement und einem hinteren Dachmodulelement eingebaut wird, oder eine öffnungsfähige Dacheinheit, die zwischen dem vorderen Querholm und einem hinteren Dachmodulelement eingebaut wird, oder eine öffnungsfähige Dacheinheit aufnimmt, die zwischen dem hinteren Querholm und einem vorderen Dachelement oder dem vorderen Querholm eingebaut wird, und daß die öffnungsfähige Dacheinheit insbesondere eine Schiebedacheinheit ist.

Nachfolgend werden Ausführungsbeispiele der Erfindung unter Bezugnahme auf Zeichnungen näher erläutert. Es zeigt:
- Fig. 1: in einer Oberansicht in schematischer Darstellung eine Dachkonstruktion eines Moduldaches eines Kraftfahrzeugs;
- Fig. 2: in einer schematischen perspektivischen Ansicht den Einbau einer Schiebedacheinheit und weiterer Dachmodulelemente gemäß einem Ausführungsbeispiel der vorliegenden Erfindung;
- Fig. 3: in einer Ansicht ähnlich Figur 2 ein weiteres Ausführungsbeispiel der vorliegenden Erfindung;
- Fig. 4: in einer vergrößerten Schnittansicht entlang der Schnittebene IV-IV in Figur 1 das in Fig. 2 gezeigte Ausführungsbeispiel;
- Fig. 5: in einer vergrößerten Schnittansicht entlang der Schnittebene V-V in Figur 1 das in Fig. 2 gezeigte Ausführungsbeispiel;
- Fig. 6: in einer vergrößerten Schnittansicht entlang der Schnittebene VI-VI in Figur 1 das in Fig. 2 gezeigte Ausführungsbeispiel;
- Fig. 7: in einer Ansicht ähnlich Figur 4 das in der Figur 3 dargestellte Ausführungsbeispiel;
- Fig. 8: in den Ansichten 8A, 8B und 8C ähnlich der Figur 1 jeweils drei Moduldächer einer gleichen Ausführungsart der vorliegenden Erfindung für ein gleiches Fahrzeug;
- Fig. 9: in den Ansichten 9A, 9B, 9C₁ und 9C₂ schematische perspektivische Ansichten, die die Moduldächer der Figuren 8A, 8B bzw. 8C betreffen;
- Fig. 10: in einer perspektivischen Draufsicht eine Rohkarosserie eines Kraftfahrzeugs mit einer Dachkonstruktion für das Moduldach; und
- Fig. 11: in den Ansichten 11a, 11b und 11c jeweils ein aus unterschiedlichen Dachmodulelementen aufgebautes Moduldach.

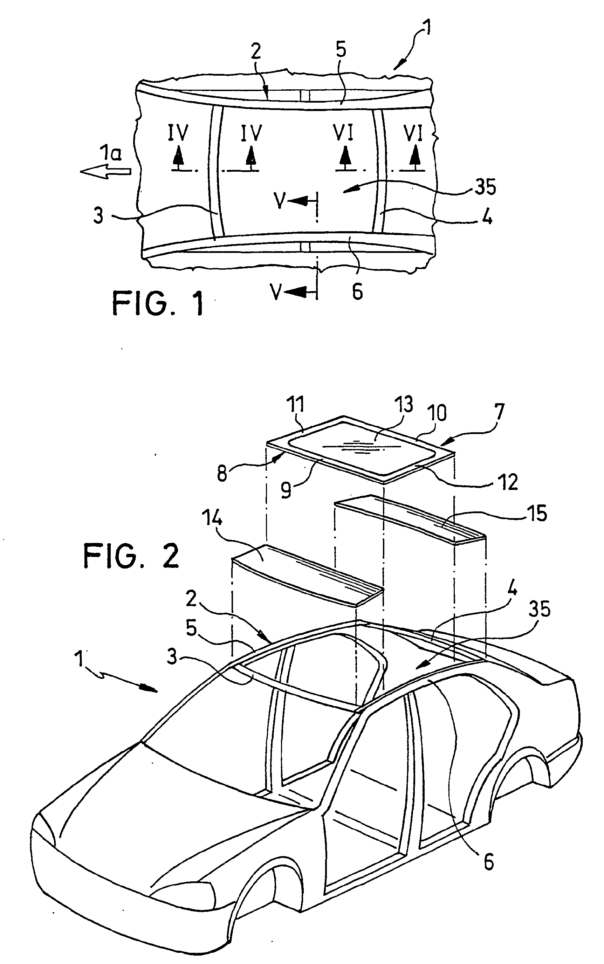

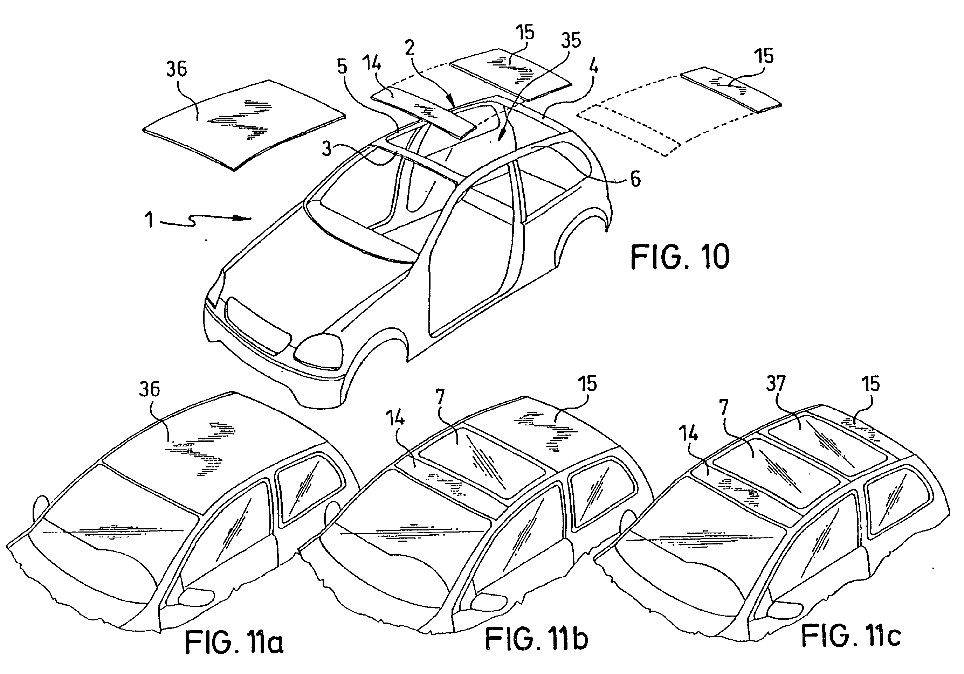

Eine Rohkarosserie eines Kraftfahrzeugs 1 mit einem Moduldach enthält eine Dachkonstruktion 2 (siehe Fig. 1 und Fig. 10) mit einem vorderen Querholm 3 am Oberrand einer Windschutzscheibe, einem hinteren Querholm 4 am Oberrand einer Heckscheibe und einem rechten und einem linken Seitenholm 5 bzw. 6. Die Holme 3, 4, 5 und 6 umgeben eine Dachkonstruktionsöffnung 35 der Rohkarosserie. Die Referenzrichtung, die der normalen Bewegungsrichtung des Kraftfahrzeugs 1 entspricht, ist durch den Pfeil 1a in Fig. 1 schematisch dargestellt.

Dachmodulelemente wie z. B. ein vorderes Dachmodulelement 14 (siehe Fig. 2, 11b und c), ein hinteres Dachmodulelement 15 und eine Schiebedacheinheit 7 ergänzen und komplettieren das modular aufgebaute Moduldach in wahlweise festlegbarer Anordnung, wobei insbesondere das vordere und das hintere Dachmodulelement 14 bzw. 15 in unterschiedlichen Größen verfügbar und einbaubar sind.

Die Schiebedacheinheit 7 enthält einen Rahmen 8 (siehe Fig. 2), der von einem vorderen und einem hinteren Rahmenquerelement 9 bzw. 10 und von einem rechten und einem linken Rahmenseitenelement 11 bzw. 12 gebildet ist. Am Rahmen 8 ist ein Schiebedachdeckel 13 beweglich gelagert. Derartige Schiebedächer sind bekannt und werden daher nicht näher beschrieben. Jedes der Rahmenseitenelemente 11, 12 enthält Mittel zum Befestigen dieses Rahmenelements 11, 12 an dem zugeordneten Seitenholm 5, 6 der Dachkonstruktion und jedes der Rahmenquerelemente 9,10 erstreckt sich zwischen den beiden Seitenholmen 5, 6 über die gesamte Breite der Dachkonstruktion 2.

Bei dem in Figur 2 dargestellten Ausführungsbeispiel ist die Schiebedacheinheit 7 zwischen dem vorderen Dachmodulelement 14 und dem hinteren Dachmodulelement 15 eingebaut, welche an dem vorderen Querholm 3 bzw. dem hinteren Querholm 4 befestigt sind.

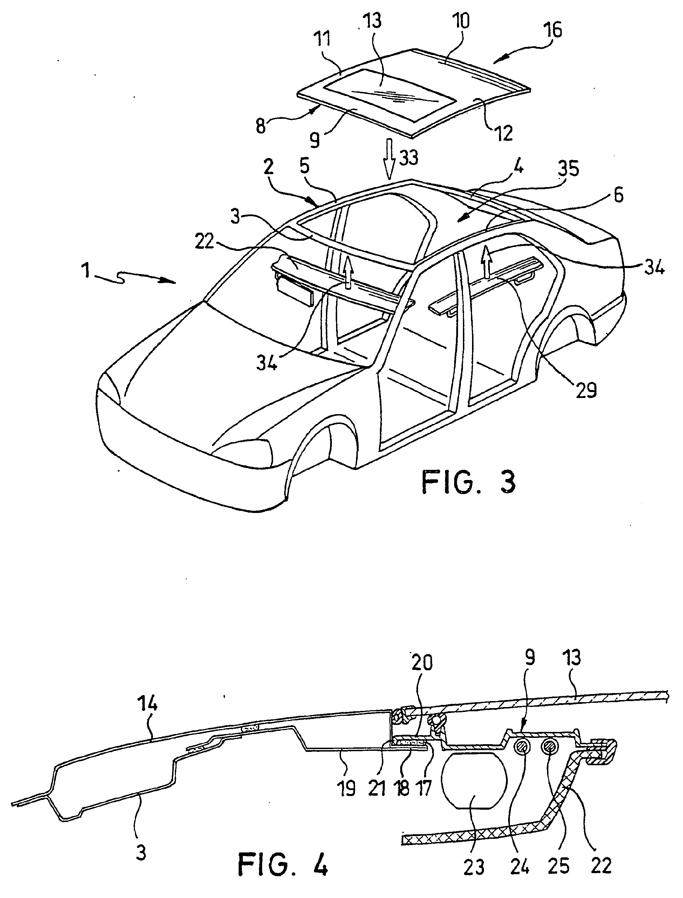

Bei dem in Figur 3 schematisch dargestellten Ausführungsbeispiel enthält die Dachkonstruktion 2 eine Schiebedacheinheit 16, deren vorderes Rahmenquerelement 9 direkt am vorderen Querholm 3 und deren hinteres Rahmenquerelement 10 direkt am hinteren Querholm 4 befestigt wird. In diesem Fall kann der Übergang zwischen der Schiebedacheinheit 16 und der Heckscheibe auf beliebige Art und Weise ausgeführt sein.

Die Dachkonstruktion 2 kann auch zum Herstellen des Moduldaches mehrere Schiebedacheinheiten umfassen, die unterschiedliche Längen in Fahrzeuglängsrichtung aufweisen, so daß sie mit vorderen und hinteren Dachmodulelementen 14, 15 unterschiedlicher Abmessungen verbunden werden können, wobei auf diese Dachmodulelemente 14, 15 im Falle einer direkten Befestigung des vorderen oder des hinteren Rahmenquerelements 9 bzw. 10 am vorderen Querholm 3 bzw. am hinteren Querholm 4 verzichtet werden kann.

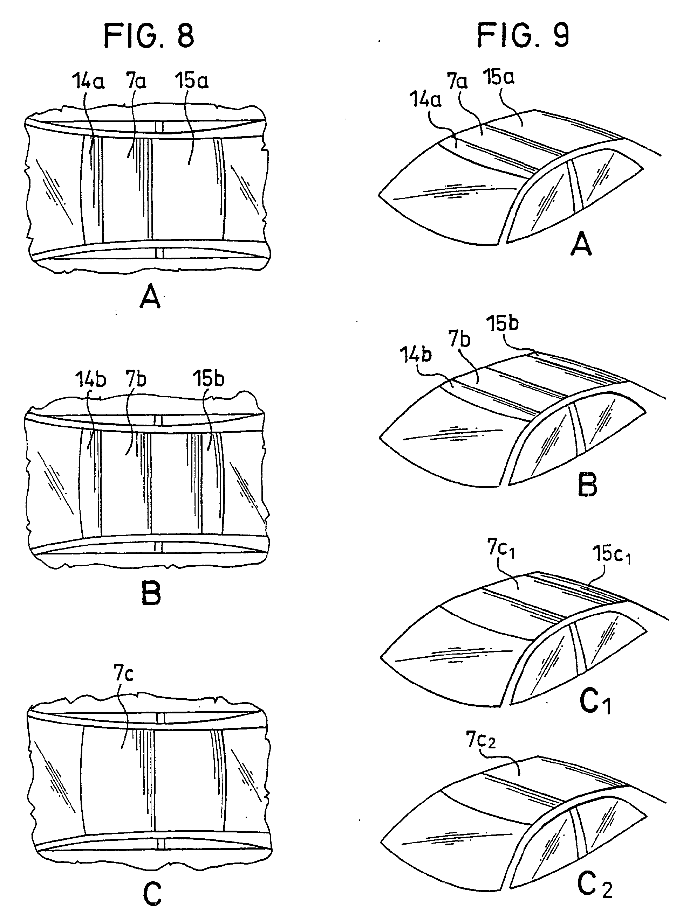

In den Figuren 8A, 8B, 8C und 9A, 9B, 9C₁ und 9C₂ sind drei Ausführungsbeispiele von Moduldächern für gleichartige Kraftfahrzeuge dargestellt.

Das eine Schiebedacheinheit bildende Dachmodulelement 7a, das in den Figuren 8A und 9A schematisch dargestellt ist, bedeckt einen kleinen Anteil wie beispielsweise ungefähr ein Drittel der Fläche des Moduldaches bzw. der Dachkonstruktionsöffnung 35. Es ist mit einem vorderen Dachmodulelement 14a und einem hinteren Dachmodulelement 15a von relativ großer Längsabmessung verbunden.

Das Dachmodulelement 7b (siehe Fig. 8B und 9B) ist mit einem vorderen und einem hinteren Dachmodulelement 14b bzw. 15b von jeweils kleineren Längsabmessungen verbunden, die im wesentlichen die Querholme 3 und 4 der Dachkonstruktion 2 bedecken.

Das Dachmodulelement 7C₁ (siehe Fig. 8C und 9C₁) bildet im wesentlichen das gesamte Dachoberteil des Moduldaches. Es verbleibt noch ein hinteres Dachmodulelement 15C₁, das beispielsweise erforderlich ist, um die Verbindung mit einer Heckklappe herzustellen.

Das Dachmodulelement 7C₂ (siehe Fig. 9C₂) bildet praktisch das gesamte Dachoberteil.

Die Verbindungen zwischen dem Dachmodulelement bzw. der Schiebedacheinheit 7C₁ oder 7C₂ mit der Windschutzscheibe und gegebenenfalls mit der Heckscheibe sind in beliebiger bekannter Weise herstellbar.

Die Fig. 11a, 11b und 11c zeigen nochmals drei Ausführungsbeispiele des Moduldaches. Das Moduldach kann wahlweise einen die gesamte Dachkonstruktionsöffnung 35 verschließenden Deckel 36, beispielsweise einen Blech- oder einen Glasdeckel, aufweisen (Fig. 11a). Eine zweite Variante des Moduldaches (Fig. 11b) enthält ein vorderes und ein hinteres festes Dachmodulelement 14 bzw. 15 und eine dazwischen angeordnete Schiebedacheinheit 7, wobei das hintere Dachmodulelement 15 wesentlich größer ist wie das vordere Dachmodulelement 14. Eine dritte Variante des Moduldaches (Fig. 11c) enthält ein vorderes und ein hinteres festes Dachmodulelement 14 bzw. 15, die in etwa die gleiche Größe aufweisen, eine dazwischen angeordnete Schiebedacheinheit 7 und einen weiteren Deckel 37, der ein Festdeckel oder ein Schiebedachdeckel sein kann.

Wie in den Figuren 4 bis 7 dargestellt ist, umfaßt jedes Rahmenelement 9 bis 12, das direkt an einem entsprechenden Holm 3 bis 6 der Dachkonstruktion 2 befestigt ist, Mittel, so daß es unter Zwischenlage einer Dichtung 17 auf einem Flansch 18 aufliegen kann, der auf der Innenseite der Holme 3, 4, 5, 6 vorgesehen ist.

Bei dem in Fig. 4 dargestellten Ausführungsbeispiel bedeckt das vordere Dachmodulelement 14 den vorderen Querholm 3 sowie ein Verstärkungsblech 19, das am hinteren Ende des vorderen Dachmodulelements 14 befestigt ist und den Flansch 18 bildet. Das vordere Ende des vorderen Rahmenquerelements 9 endet mit einer im wesentlichen zu dem Flansch 18 parallelen Abdeckung 20, deren vorderer nach unten umgelegter Rand 21 auf dem Flansch 18 aufliegt, wobei er auf eine eine Dichtung bildende Kleberschnur 17 drückt. Die Kleberschnur 17 enthält beispielsweise einen Polyurethankleber. Eine sichtbare Innenverkleidung 22 deckt einen Antriebsmotor 23 und Kabel 24, 25 für den Antrieb des beweglichen Deckels 13 der Schiebedacheinheit ab.

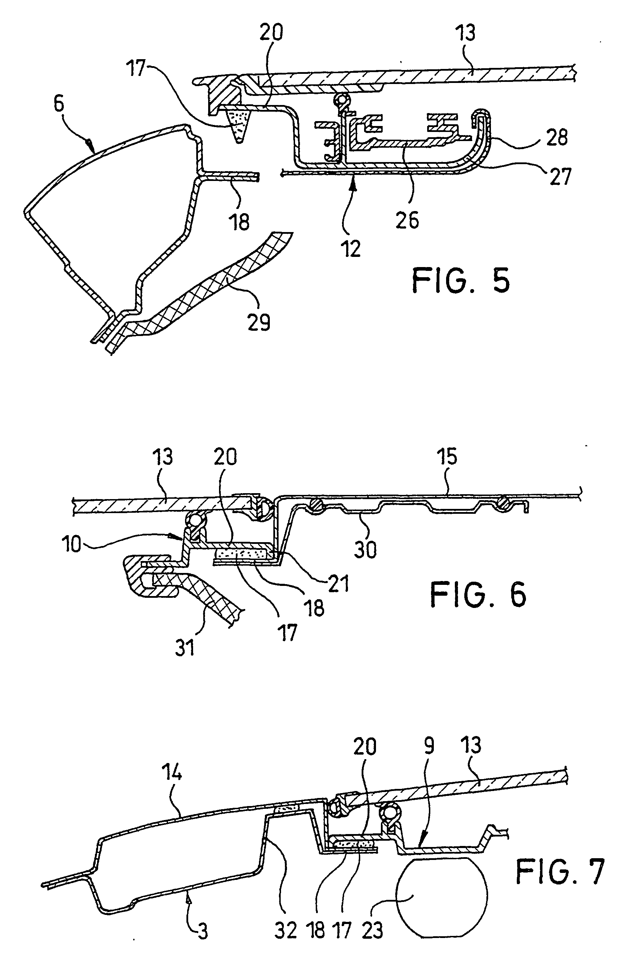

Bei dem in Fig. 5 dargestellten Ausführungsbeispiel trägt das Rahmenseitenelement 12 des Rahmens 8, das genau über dem Flansch 18 des vorderen linken Seitenholms 6 angeordnet ist, auf der Unterseite der Abdeckung 20 eine noch nicht zusammengedrückte Kleberschnur 17. Eine Einheit 26, die die seitliche Führungsschiene des Schiebedachdeckels 13 bildet, ist seitlich zum Fahrzeuginnenraum hin durch eine Wand 27 abgedeckt, deren Sichtfläche auf herkömmliche Weise mit einem Stoff 28 überzogen ist. Die Verkleidung 29, die beispielsweise einen oder mehrere Haltegriffe und einen oder mehrere Airbags (nicht dargestellt) umfaßt, ist auf herkömmliche Weise am Seitenholm 6 montiert.

Bei dem in Fig. 6 dargestellten Ausführungsbeispiel umfaßt das hintere Dachmodulelement 15 auf seiner Unterseite eine gerippte Verstärkung 30, die gemeinsam mit dem Dachmodulelement 15 den Flansch 18 bildet. Die Verkleidung 31 ist an dem hinteren Rahmenquerelement 10 befestigt.

Bei dem in Fig. 7 dargestellten Ausführungsbeispiel bedeckt das vordere Dachmodulelement 14 den vorderen Querholm 3, der einen hinteren U-förmigen Profilabschnitt mit einem Endabschnitt 32 mit einem äußeren abwärts verlaufenden Schenkel und einem sodann nach hinten umgebogenen Flansch 18 aufweist.

Die Schiebedacheinheit 7, 16 ist derart vorgefertigt, daß sie an der Dachkonstruktionsöffnung 35 eines Kraftfahrzeugs 1 als komplettes, mit ihrer Innenverkleidung versehenes Modulteilsystem angebracht werden kann.

Wie in den Fig. 2 und 3 schematisch dargestellt ist, werden zuerst das vordere Dachmodulelement 14 und das hintere Dachmodulelement 15 (falls dieses vorhanden ist) montiert. Daraufhin wird die Schiebedacheinheit 7, 16 an der Dachkonstruktion 2 angeordnet (Pfeil 33 in Figur 3). Sodann können die vordere Verkleidung 22, die seitliche Verkleidung 29 und die hintere Verkleidung 31 (Pfeile 34) montiert werden.

Somit weist das beschriebene, einfach aufgebaute Moduldach Dachmodulelemente auf, die direkt an den Dachseitenholmen 5, 6 der z. B. aus Blech gefertigten Dachkonstruktion 2 eines Kraftfahrzeugs angeordnet und befestigt werden können, wobei das Moduldach gegebenenfalls auf einfache und wirtschaftliche Art und Weise durch weitere, z. B. ein vorderes und/oder ein hinteres Dachmodulelement 14 bzw. 15 ergänzt werden kann.

Die Verkleidungen, optional mit zusätzlichen Bauteilen wie Sonnenschutz, Handgriffe usw., können sodann auf herkömmliche Weise montiert werden.

Ein solches Moduldach ermöglicht eine Verringerung der Montage- und Investitionskosten, bietet die Vorzüge der Modularität bei einem gleichen Fahrzeugtyp und eine größere und somit wirksamere Öffnung des Schiebedaches, indem jede konstruktive Freiheit hinsichtlich der Ausführung der Innen- und Außenformen besteht.

Durch ein solches Moduldach können auch die herkömmlichen Schnittstellen bezüglich der Dichtungen, der Wasserableitungsrohre und der Mittel zur Einstellung des beweglichen Deckels reduziert werden.

Ein solches Moduldach ermöglicht einen einfachen Einbau von Zubehörteilen, wie beispielsweise einer Antenne, einer Funktionskonsole oder eines Kabelbaumes usw..

Die vorliegende Erfindung ist nicht auf die beschriebenen Ausführungsbeispiele beschränkt, vielmehr können daran zahlreiche Änderungen und Modifikationen vorgenommen werden, ohne über den Rahmen der Erfindung hinauszugehen.

### Bezugszeichenliste

- 1: Kraftfahrzeug
- 2: Dachkonstruktion
- 3: Querstrebe
- 4: Querstrebe
- 5: Dachseitenholm
- 6: Dachseitenholm
- 7: Schiebedacheinheit
- 8: Rahmen
- 9: Rahmenquerelement
- 10: Rahmenquerelement
- 11: Rahmenseitenelement
- 12: Rahmenseitenelement
- 13: Schiebedachdeckel
- 14: Dachelement
- 15: Dachelement
- 16: Schiebedacheinheit
- 17: Dichtungsmittel, Kleberschnur
- 18: Flansch
- 19: Verstärkungsblech
- 20: Abdeckung
- 21: Rand
- 22: Innenverkleidung
- 23: Antriebsmotor
- 24: Kabel
- 25: Kabel
- 26: Einheit
- 27: Wand
- 28: Stoff
- 29: Verkleidung
- 30: Verstärkung
- 31: Verkleidung
- 32: Endabschnitt
- 33: Pfeil
- 34: Pfeil
- 35: Dachkonstruktionsöffnung
- 36: Deckel
- 37: Deckel

## Patentansprüche

1. Kraftfahrzeug mit einem Moduldach, das an einer Dachkonstruktion (2) der Rohkarosserie des Kraftfahrzeugs (1), die einen vorderen und einen hinteren Querholm (3 bzw. 4) und einen rechten und einen linken Seitenholm (5 bzw. 6) aufweist, befestigt ist, wobei
das Moduldach zumindest zwei Dachmodulelemente (7, 14, 15) aufweist, die eine von den Seitenholmen (5 bzw. 6) begrenzte Dachkonstruktionsöffnung (35) teilweise oder vollständig verschließen und **dadurch gekennzeichnet, daß** die zwei Dachmodulelemente (7, 14, 15) unmittelbar an der Dachkonstruktion (2) befestigt sind.

2. Kraftfahrzeug nach Anspruch 1,
**dadurch gekennzeichnet, daß** die sich über die gesamte Breite der Dachkonstruktion erstreckenden Dachmodulelemente (7, 14, 15, 37) an den sich gegenüberliegenden Seitenholmen (5, 6) insbesondere lösbar befestigt sind.

3. Kraftfahrzeug nach Anspruch 1 oder 2,
**dadurch gekennzeichnet, daß** die Querholme (3, 4) die Dachkonstruktionsöffnung (35) begrenzen.

4. Kraftfahrzeug nach einem der Ansprüche 1 bis 3,
**dadurch gekennzeichnet, daß** eine zwischen zwei Dachmodulelementen (14, 15) oder zwischen einem Dachmodulelement (14) und einem Querholm (3 bzw. 4) verbleibende Dachöffnung von zumindest einem weiteren Dachmodulelement (7) verschließbar ist.

5. Kraftfahrzeug nach einem der Ansprüche 1 bis 4,
**dadurch gekennzeichnet, daß** die Dachmodulelement Deckel, transparente Deckel, Glasdeckel oder Funktionsdachteile wie öffnungsfähige Dachteile und insbesondere Schiebedacheinheiten sind.

6. Kraftfahrzeug nach einem der Ansprüche 1 bis 5,
**dadurch gekennzeichnet, daß** die Dachkonstruktion (2) aus Metallblech besteht.

7. Kraftfahrzeug nach einem der Ansprüche 1 bis 6,
**dadurch gekennzeichnet, daß** ein Dachmodulelement (7), das insbesondere eine Schiebedacheinheit ist, einen Rahmen (8) aufweist.

8. Kraftfahrzeug nach Anspruch 7,
**dadurch gekennzeichnet, daß** die Schiebedacheinheit (7, 16) einen Rahmen (8) mit einem vorderen und einem hinteren Rahmenquerelement (9 bzw. 10) und einem rechten und einem linken Rahmenseitenelement (11 bzw. 12) aufweist und einen am Rahmen (8) beweglich gelagerten Deckel (13) aufnimmt, und daß jedes der Rahmenseitenelemente (11, 12) Mittel zur Befestigung dieses Rahmenseitenelements (11, 12) an dem jeweiligen Seitenholm (5. 6) umfaßt und daß sich jedes der Rahmenquerelemente (9, 10) über die gesamte Breite der Dachkonstruktion (2) zwischen den beiden Seitenholmen (5, 6) erstreckt.

9. Kraftfahrzeug nach Anspruch 8,
**dadurch gekennzeichnet, daß** das vordere Rahmenquerelement (9) zum direkten Befestigen an dem Querholm (3) am Oberrand der Windschutzscheibe und das hintere Rahmenquerelement (10) zum direkten Befestigen an dem Querholm (4) am Oberrand der Heckscheibe vorgesehen ist.

10. Kraftfahrzeug nach einem der Ansprüche 1 bis 9,
**dadurch gekennzeichnet, daß** jedes direkt an einem zugeordneten Holm (3, 4, 5, 6) der Dachkonstruktion (2) befestigte Rahmenelement (9, 10, 11, 12) Mittel umfaßt, so daß es unter Zwischenlage einer Dichtung (17) auf einem Flansch (18) aufliegt, der auf der Innenseite des Holms (3, 4, 5, 6) vorgesehen ist.

11. Kraftfahrzeug nach einem der Ansprüche 1 bis 10,
**dadurch gekennzeichnet, daß** die Schiebedacheinheit (7, 16) als ein mit einer Innenverkleidung komplett vorgefertigtes Teilsystem an der Dachkonstruktion (2) anbringbar ist.

12. Kraftfahrzeug (1) nach einem der Ansprüche 1 bis 11,
**dadurch gekennzeichnet,**
**daß** es in einem jeweiligen Moduldach alternativ entweder eine öffnungsfähige Dacheinheit (7), die zwischen einem vorderen Dachmodulelement (14) und einem hinteren Dachmodulelement (15) eingebaut wird, oder eine öffnungsfähige Dacheinheit, die zwischen dem vorderen Querholm (3) und einem hinteren Dachmodulelement (15) eingebaut wird, oder eine öffnungsfähige Dacheinheit (16) aufnimmt, die zwischen dem hinteren Querholm (4) und einem vorderen Dachelement (14) oder dem vorderen Querholm (3) eingebaut wird, und daß die öffnungsfähige Dacheinheit (16) insbesondere eine Schiebedacheinheit ist.

## Claims

1. Motor vehicle having a modular roof which is fixed to a roof construction (2) of the bodyshell of the motor vehicle (1), which has a front and a rear crossmember (3 and 4) and a right and a left side member (5 and 6), the modular roof having at least two roof module elements (7, 14, 15) which partly or completely close a roof construction opening (35) delimited by the side members (5 and 6) and **characterized in that** the two roof module elements (7, 14, 15) are fixed directly to the roof construction (2).

2. Motor vehicle according to Claim 1, **characterized in that** the roof module elements (7, 14, 15, 37) extending over the entire width of the roof construction are in particular detachably fixed to the opposite side members (5, 6).

3. Motor vehicle according to Claim 1 or 2, **characterized in that** the crossmembers (3, 4) delimit the roof construction opening (35).

4. Motor vehicle according to one of Claims 1 to 3, **characterized in that** a roof opening remaining between two roof module elements (14, 15) or between a roof module element (14) and a crossmember (3 or 4) can be closed by at least one further roof module element (7).

5. Motor vehicle according to one of Claims 1 to 4, **characterized in that** the roof module elements are panels, transparent panels, glass panels or functional roof parts such as openable roof parts and, in particular, sliding roof units.

6. Motor vehicle according to one of Claims 1 to 5, **characterized in that** the roof construction (2) consists of metal sheet.

7. Motor vehicle according to one of Claims 1 to 6, **characterized in that** a roof module element (7) which is in particular a sliding roof unit has a frame (8).

8. Motor vehicle according to Claim 7, **characterized in that** the sliding roof unit (7, 16) has a frame (8) with a front and a rear frame transverse element (9 and 10) and a right and a left frame side element (11 and 12) and accommodates a panel (13) mounted on the frame (8) such that it can move, and **in that** each of the frame side elements (11, 12) comprises means for fixing this frame side element (11, 12) to the respective side member (5, 6), and **in that** each of the frame transverse elements (9, 10) extends over the entire width of the roof construction (2) between the two side members (5, 6).

9. Motor vehicle according to Claim 8, **characterized in that** the front frame transverse element (9) is provided for direct fixing to the crossmember (3) at the upper edge of the windscreen, and the rear frame transverse element (10) is provided for direct fixing to the crossmember (4) at the upper edge of the rear window.

10. Motor vehicle according to one of Claims 1 to 9, **characterized in that** each frame element (9, 10, 11, 12) fixed directly to an associated member (3, 4, 5, 6) of the roof construction (2) comprises means such that, with the interposition of a seal (17), it rests on a flange (18) which is provided on the inside of the member (3, 4, 5, 6).

11. Motor vehicle according to one of Claims 1 to 10, **characterized in that** the sliding roof unit (7, 16) can be fitted to the roof construction (2) as a subsystem completely prefabricated with an inner lining.

12. Motor vehicle (1) according to one of Claims 1 to 11, **characterized in that**, in a respective modular roof, it accommodates alternatively either an openable roof unit (7) which is installed between a front roof module element (14) and a rear roof module element (15), or an openable roof unit which is installed between the front crossmember (3) and a rear roof module element (15), or an openable roof unit (16) which is installed between the rear crossmember (4) and a front roof element (14) or the front crossmember (3), and **in that** the openable roof unit (16) is in particular a sliding roof unit.

## Revendications

1. Véhicule automobile avec un toit modulaire qui est fixé sur une structure de toit (2) de la carrosserie brute du véhicule automobile (1), structure qui présente un montant transversal respectif avant (3) et arrière (4) et un montant latéral respectif de droite (5) et de gauche (6), sachant que le toit modulaire présente au moins deux éléments modulaires de toit (7, 14, 15) qui ferment partiellement ou totalement une ouverture (35) de structure de toit délimitée par les montants latéraux (5, 6), **caractérisé en ce que** les deux éléments modulaires de toit (7, 14, 15) sont directement fixés sur la structure de toit (2).

2. Véhicule automobile selon la revendication 1, **caractérisé en ce que** les éléments modulaires de toit (7, 14, 15, 37), qui s'étendent sur toute la largeur de la structure de toit, sont fixés notamment de manière amovible sur les montants latéraux en vis-à-vis (5, 6).

3. Véhicule automobile selon la revendication 1 ou 2, **caractérisé en ce que** les montants transversaux (3, 4) délimitent l'ouverture (35) de structure de toit.

4. Véhicule automobile selon l'une des revendications 1 à 3, **caractérisé en ce qu'**une ouverture de toit restant présente entre deux éléments modulaires de toit (14, 15) ou entre un élément modulaire de toit (14) et un montant transversal (3 ou 4) peut être fermée par au moins un élément modulaire de toit supplémentaire (7).

5. Véhicule automobile selon l'une des revendications 1 à 4, **caractérisé en ce que** les éléments modulaires de toit sont des panneaux, des panneaux transparents, des panneaux en verre ou des éléments fonctionnels de toit comme des éléments de toit ouvrant et notamment des ensembles de toit coulissant.

6. Véhicule automobile selon l'une des revendications 1 à 5, **caractérisé en ce que** la structure de toit (2) est réalisée en tôle métallique.

7. Véhicule automobile selon l'une des revendications 1 à 6, **caractérisé en ce qu'**un élément modulaire de toit (7), qui est notamment un ensemble de toit coulissant, présente un cadre (8).

8. Véhicule automobile selon la revendication 7, **caractérisé en ce que** l'ensemble de toit coulissant (7, 16) présente un cadre (8) avec un élément transversal de cadre respectif avant (9) et arrière (10) et un élément latéral de cadre respectif de droite (11) et de gauche (12), et reçoit un panneau (13) monté à déplacement sur le cadre (8), et **en ce que** chacun des éléments latéraux de cadre (11, 12) comprend des moyens pour la fixation de cet élément latéral de cadre (11, 12) sur le montant latéral respectif (5, 6), et **en ce que** chacun des éléments transversaux de cadre (9, 10) s'étend sur toute la largeur de la structure de toit (2) entre les deux montants latéraux (5, 6).

9. Véhicule automobile selon la revendication 8, **caractérisé en ce que** l'élément transversal de cadre avant (9) est prévu pour la fixation directe sur le montant transversal (3) sur le bord supérieur du pare-brise, et l'élément transversal de cadre arrière (10) pour la fixation directe sur le montant transversal (4) sur le bord supérieur de la lunette arrière.

10. Véhicule automobile selon l'une des revendications 1 à 9, **caractérisé en ce que** chaque élément de cadre (9, 10, 11, 12) directement fixé sur un montant associé (3, 4, 5, 6) de la structure de toit (2) comprend des moyens lui permettant de reposer avec intercalation d'un joint d'étanchéité (17) sur une bride (18) qui est prévue sur le côté intérieur du montant (3, 4, 5, 6).

11. Véhicule automobile selon l'une des revendications 1 à 10, **caractérisé en ce que** l'ensemble de toit coulissant (7, 16) peut être installé sur la structure de toit (2) sous la forme d'un système partiel complètement préfabriqué, avec une garniture intérieure.

12. Véhicule automobile (1) selon l'une des revendications 1 à 11, **caractérisé en ce qu'**il reçoit alternativement, dans un toit modulaire respectif, soit un ensemble de toit ouvrant (7) qui est installé entre un élément modulaire de toit avant (14) et un élément modulaire de toit arrière (15), soit un ensemble de toit ouvrant qui est installé entre le montant transversal avant (3) et un élément modulaire de toit arrière (15), soit un ensemble de toit ouvrant (16) qui est installé entre le montant transversal arrière (4) et un élément modulaire de toit avant (14) ou le montant transversal avant (3), et **en ce que** l'ensemble de toit ouvrant (16) est notamment un ensemble de toit coulissant.
